Europäisches Patentamt

European Patent Office

Office européen des brevets

(11) Publication number: **0 314 273**
**A1**

# EUROPEAN PATENT APPLICATION

(21) Application number: 88306969.2

(51) Int. Cl.⁴: **B62D 55/24**

(22) Date of filing: 28.07.88

(30) Priority: 28.10.87 US 113670

(43) Date of publication of application:
03.05.89 Bulletin 89/18

(84) Designated Contracting States:
CH DE FR GB IT LI SE

(71) Applicant: EDWARDS, HARPER, McNEW AND
COMPANY
Route.39, Box 821
Fort Myers Florida 33908(US)

(72) Inventor: Edwards, John W.
209 North St. Cloud Avenue
Valrico Florida 33594(US)
Inventor: Harper, Daniel R.
5351 Six Mile Cypress Parkway
Fort Myers Florida 33912(US)
Inventor: McNew, Quinton B.
5351 Six Mile Cypress Parkway
Fort Myers Florida 33912(US)

(74) Representative: Richards, David John et al
Page, White & Farrer 5, Plough Place New
Fetter Lane
London EC4A 1HY(GB)

(54) Endless track drive system and method of retrofitting endless track drive vehicles therewith.

(57) A endless track drive system for use on a track vehicle such as a bulldozer includes a polymeric endless drive track (10) with a plurality of polymeric drive members (11) integrally formed therewith, at least one reinforcement member (4) encased within the endless drive track, and a sprocket for engaging with the drive members to drive the endless drive track. The sprocket may be incorporated onto a drive wheel whose side portions include holes for escape of dirt and debris, and the endless track drive system may also include frictional engagement between the drive wheel and the endless drive track. The endless drive track system also may include tread members (17) which are either integrally formed with, bonded to or removably fastened to the endless drive track, and grooves and/or a scraper for removing dirt and debris from the endless drive track and/or the vehicle wheels. A method is also provided for retrofitting heavy duty track vehicles with the endless track drive system.

Fig. 4

## ENDLESS TRACK DRIVE SYSTEM AND METHOD OF RETROFITTING ENDLESS TRACK DRIVE VEHICLES THEREWITH

### BACKGROUND OF THE INVENTION

This application is a continuation-in-part of U.S. Application Serial Nos. 049,819 and 051,830, filed May 14, 1987 and May 20, 1987, respectively. U.S. Application Serial Nos. 049,819 and 051,830 are fully incorporated herein by reference.

The present invention relates to an endless track drive system. Endless track drive systems are used on vehicles such as tractors, bulldozers and tanks.

Many efforts have been made to improve endless track drive systems. In Edwards U.S. Patent No. 4,093,318, issued June 6, 1978 (fully incorporated herein by reference), an endless track drive system is disclosed and claimed which includes a plurality of endless track drive sections, each section having a substantially flat contact surface and sloped surfaces to distribute weight and shed dirt and other foreign objects. Although U.S. Patent No. 4,093, 318 represented a marked improvement in endless track drive systems existing prior to that time, the pivotal means of connecting the endless track drive sections was subject to excessive wear, and the endless track drive system there disclosed continued to be excessively costly and time-consuming to make, and it was further found that dirt and foreign objects continued to interfere with proper operation of the endless track drive system, although again not to the extent of track drive systems existing prior thereto.

In further recent developmental work, Edwards and his partners/co-inventors Harper and McNew have further improved upon the endless track drive system disclosed in Edwards U.S. Patent No. 4,093,318. Their U.S. Patent Nos. 4,569,561 issued February 11, 1986, and 4,616,883 issued October 14, 1986 (both fully incorporated herein by reference), disclose and claim an endless track drive system made up of a number of drive sections interconnected by cable connector sections. As there disclosed, the drive sections have sloping sides with removable rubber wear pads, and the cable connector sections include cables encased in rubber or other similar suitable material. As a result of such features, the endless track drive system disclosed and claimed therein experiences improved flexibility and tensile strength, reduced noise, and reduced maintenance. The detrimental effects of dirt and debris are likewise mitigated.

Despite the marked improvement in endless track drive systems resulting from the recent work of Edwards, Harper and McNew, as represented in U.S. Patent Nos. 4,569,561 and 4,616,883, there remains a need for simplification in the manufacture and use of even that improved endless track drive system. Furthermore, the industry is always interested in and receptive to mitigating even further the effects of dirt and debris on endless track drive systems because of the resulting operational problems, downtime and increased maintenance.

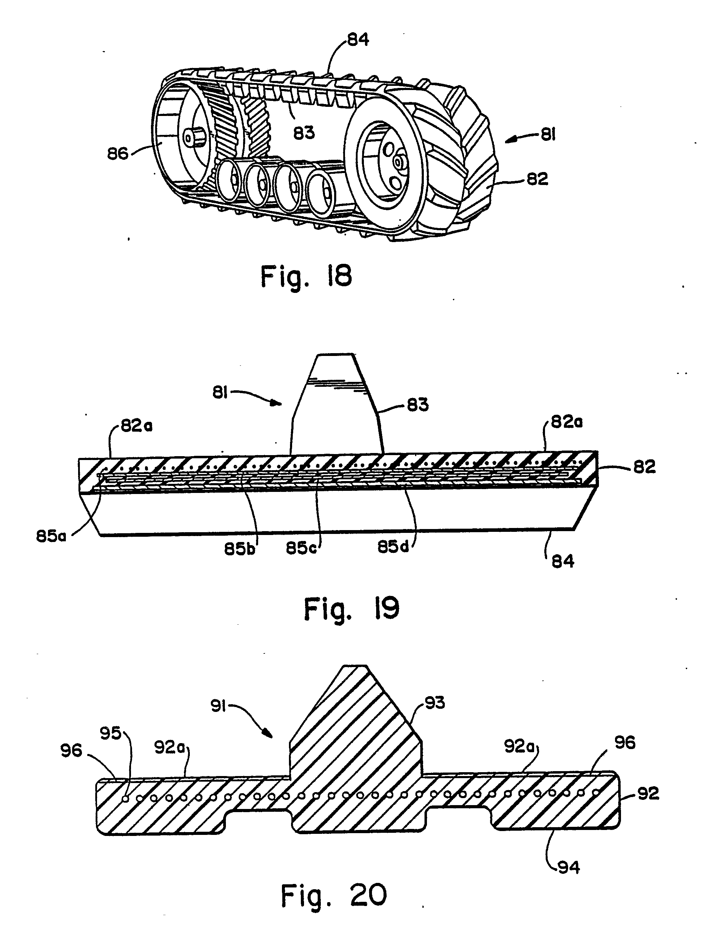

An endless track drive system for heavy duty track vehicles is also known which utilizes a friction drive elastomeric closed loop endless drive track, such as the one depicted in FIGS. 18 and 19 herein. As there depicted, this endless track drive system 81 comprises an elastomeric closed loop endless drive track 82 with tread members 84 and guide members 83 joined to and extending in a direction internally of the drive track. The drive track 82 has reinforcement elements 85a-85d, and is driven by drive wheels 86 in frictional contact with flat lands 82a of drive track 82. This type of endless track drive system is disclosed in PCT Publication No. WO 85/2824 (July 4, 1985).

Unfortunately, the above-discussed endless track drive system of PCT Publication No. WO 85/2824 suffers from a number of deficiences. For example, in certain types of terrains vehicles equipped with such an endless track drive system have experienced unacceptable slippage, thereby preventing optimal utilization of such vehicles over such terrains. Secondly, although the friction drive wheels of such endless track drive system were designed to dissipate dirt and debris, entrapment of dirt and debris continues to be a problem due to the horizontal engagement between the drive wheels and the drive track.

Thus, there further remains a need for an improved endless track drive system which can be utilized on such heavy duty track vehicles to overcome the above problems. Furthermore, due to the number of such heavy duty track vehicles in service, there is a need for an endless track drive system which easily can be retrofitted onto the existing heavy duty track vehicles.

### SUMMARY OF THE INVENTION

Accordingly, the present invention has been developed to overcome the foregoing shortcomings of the prior most recent improved endless track drive system, and to provide an endless track drive system which has an improved construction, is simpler, less costly and less time-consuming to manufacture and use, and which is less susceptible to interference by dirt and debris.

The present invention also has been developed to overcome the foregoing shortcomings of the above-discussed elastomeric closed loop endless track drive system, including elimination of slippage, and to provide an endless track drive system which can be retrofitted onto heavy duty track vehicles previously equipped with the above-discussed elastomeric closed loop endless track drive system.

It is therefore an object of the present invention to provide an endless track drive system with improved construction which is more resistant to contamination by dirt, sand, gravel and other foreign objects.

It is yet another object of the present invention to provide an endless track drive system which can be efficiently and economically manufactured and utilized.

It is yet still another object of the present invention to provide an endless track drive system which can be utilized over varying terrains without slippage between drive wheels and drive track.

It is a still further object of the present invention to provide an endless track drive system which can be retrofitted onto existing heavy duty track vehicles previously equipped with a friction drive elastomeric .closed loop endless track drive system.

Thus, in accordance with one aspect of the present invention the shortcomings of the above-discussed friction drive elastomeric closed loop endless track drive system are overcome by an endless track drive system comprising a polymeric endless drive track including a plurality of polymeric drive members integrally formed therewith; at least one reinforcement member encased within the polymeric endless drive track; and sprocket means for engaging with the drive members to drive the polymeric endless drive track.

In accordance with another aspect of the present invention, the sprocket means is incorporated onto the axle of a drive wheel, and the drive wheel frictionally engages with the polymeric endless drive track to further drive the polymeric endless drive track.

In accordance with yet another aspect of the present invention, the endless track drive system includes means for removing dirt and debris therefrom.

In accordance with still another aspect of the present invention, the endless track drive system includes at least one tread member fixed to the endless drive track, either integrally, by bonding, or with removable fasteners.

In accordance with an even further aspect of the present invention, the endless drive track alternatively is formed as a closed loop or has two ends joined together with a master link.

In accordance with yet another aspect of the present invention, a method is provided for retrofitting a heavy duty track vehicle having a friction drive elastomeric closed loop endless drive track with guide members joined thereto. The method comprises the steps of replacing the elastomeric closed loop endless drive track with a polymeric endless drive track having polymeric drive members integrally formed therewith and at least one reinforcement member encased therein; and installing sprocket means on the vehicle for engaging the drive members to provide positive drive.

In accordance with still a further aspect of the present invention, the retrofitting method includes the additional step of removing existing friction drive wheels from the track vehicle upon installation of the sprocket means.

In accordance with still other aspects of the present invention, the retrofitting method variously includes the steps of providing the polymeric endless drive track with tread members, incorporating the sprocket means onto the axle of a drive wheel, the drive wheel being in frictional engagement with the polymeric endless drive track for providing friction drive in addition to the sprocket drive, providing the endless track drive system with means for removing dirt and debris, and joining ends of the polymeric endless drive track with a master link to form the polymeric endless drive track.

These and other aspects and advantages of the present invention are described in or apparent from the following detailed description of the preferred embodiments.

## BRIEF DESCRIPTION OF THE DRAWINGS

The preferred embodiments are described with reference to the drawings in which:

FIG. 1 is a perspective view of a bulldozer equipped with an endless track drive system in accordance with the present invention;

FIG. 2 is a partial enlarged view of the endless track drive system of FIG. 1, including an endless track in accordance with the present invention;

FIG. 3 is a transverse sectional view of the endless track of FIG. 2 taken through one of the drive members therof;

FIG. 4 is a partial longitudinal sectional view of the endless track of FIG. 2 taken along the line 4-4 of FIG.3;

FIG. 5 is a transverse sectional view of the endless track of FIG. 2 similar to FIG. 3 and depicting a bias-ply, fiber reinforced tread member;

FIG. 6 is a transverse sectional view of the endless track of FIG. 2 similar to FIG. 3 and depicting a cable reinforced tread member;

FIG. 7 is a partial longitudinal elevational view of the endless track of FIG. 2 equipped with removable tread members;

FIG. 8 is an exploded view of an endless track drive member and the removable tread member of FIG. 7;

FIG. 9 is a partial longitudinal elevational view of the endless track of FIG. 2 equipped with another type of removable tread·member;

FIG. 10 is a perspective view of yet another removable tread member for use with the endless track of the present invention;

FIG. 11 is a sectional view taken through an axle of a drive wheel in accordance with an embodiment of the present invention depicting the endless track engaged with a sprocket;

FIG. 12 is a side view of the drive wheel and sprocket of FIG. 11;

FIG. 13 is a further sectional view of the drive wheel and sprocket of FIG. 11 taken through the drive wheel axle;

FIG. 14 is a perspective view, partially in cross-section, depicting the endless track of FIG. 2 in position on the drive wheel of FIGS. 11-13;

FIG. 15 is an elevational view of a drive wheel in accordance with yet a further embodiment of the present invention incorporating debris escape holes;

FIG. 16A is an elevational view of an endless track drive member in accordance with yet a further embodiment of the present invention;

FIG. 16B is an elevational view of an endless track drive member in accordance with still a further embodiment of the present invention;

FIG. 17 is en elevational view of a scraper tool usable with the endless track drive system of the present invention.

FIG. 18 is a perspective view of an endless track drive system having a friction drive elastomeric closed loop endless drive track driven by friction drive wheels engaged with horizontal surfaces of the drive track;

FIG. 19 is a transverse sectional view of the endless drive track of FIG. 18 taken between two guide members therof;

FIG. 20 is a transverse sectional view of a polymeric endless drive track in accordance with the present invention, similar to the endless drive track depicted in FIG. 2 but having the general configuration of the endless drive track depicted in FIGS. 18 and 19;

FIG. 21 is a longitudinal sectional view of a master link in accordance with the present invention;

FIG. 22 is a transverse sectional view of the master link of FIG. 21;

FIG. 23 is a plan view of the lower base portion part of the master link of FIG. 21;

Fig. 24 is a longitudinal sectional view of the master link of FIG. 21 linking the two ends of an endless drive track;

FIG. 25 is a longitudinal sectional view of a master link in accordance with another embodiment of the present invention linking the two ends of an endless drive track and the two ends of a reinforced continuous removable tread member in accordance with the present invention;

FIG. 26 is an exploded view of a master link base portion, removable backing plate and removable tread usable in the endless track drive system of the present invention;

FIG. 27 depicts a partial endless drive track with spherical retaining members for utilization with the master link of the present invention; and

FIG. 28 depicts a partial endless drive track with a cable and retaining rod arrangement for utilization with the master link of the present invention.

## DESCRIPTION OF THE PREFERRED EMBODIMENTS

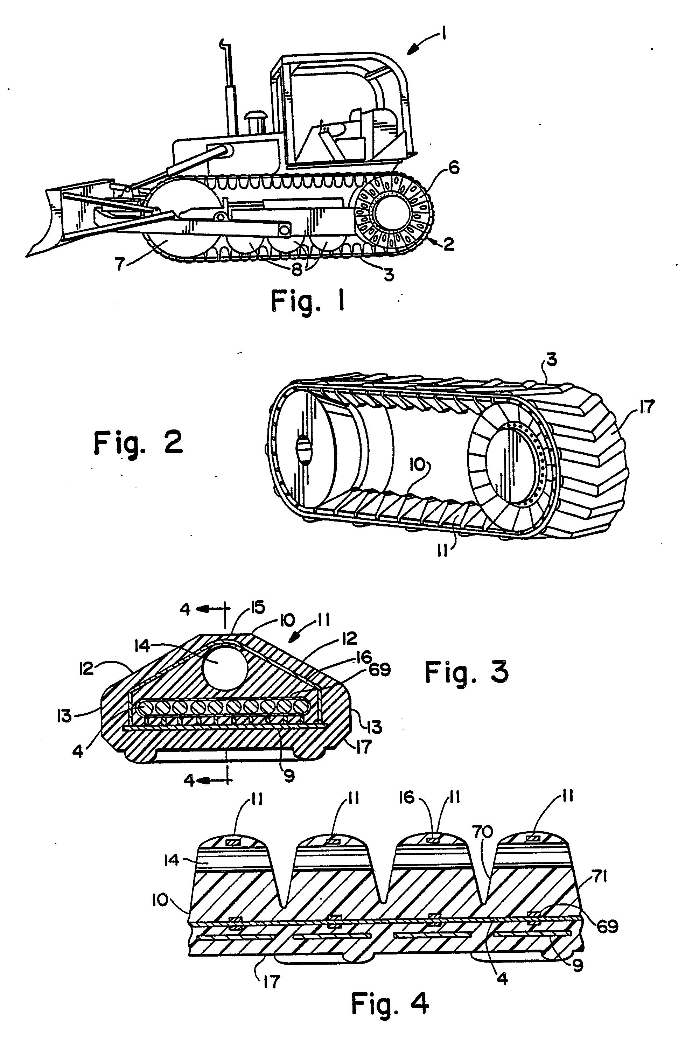

FIG. 1 depicts an endless track drive system 2 in accordance with a first embodiment of the present invention installed on a bulldozer 1. FIG. 1 depicts only one endless track drive system, but it will be understood that the typical track vehicle is equipped with at least two such systems.

Each endless track drive system 2 is made up of a closed loop endless track 3 in conjunction with the necessary drive wheel 6 and any necessary supporting wheels, such as opposite end wheel 7 and idler wheels or rollers 8. The endless track is installed so as to pass around the wheels 6, 7 and 8. The idler wheels 8 are irregularly spaced so as not to simultaneously engage like points on the endless track, thereby preventing undue vibrations. Of course, the track vehicle is further equipped with the necessary power source and controls to power the endless track drive system 2 and thereby propel the vehicle over varying terrain as desired.

FIGS. 2-6 further depict the endless track 3 in accordance with the first embodiment of the present invention. Endless track 3 comprises a continuous, closed loop polymeric structure 10.

The polymeric struc ture is preferably molded, but may be constructed in other ways. The polymeric structure can be formed of any polymeric material which will provide a suitable frictional drive surface with limited operational noise; examples are rubber, polyurethane, or other plastics. As shown in FIGS. 2 and 4, the polymeric structure 10 is formed into a plurality of integrally interconnected polymeric drive members 11.

Encased within the polymeric structure 10 is at least one continuous, closed loop reinforcement member 4, the reinforcement member 4 both reinforcing the endless track 3 and· interconnecting adjacent drive members 11 to form the endless track. The reinforcement members 4 are preferably steel cables, but also may be made of other metals or materials such as nylon or other high strength light weight cord or fabric. Although ten reinforcement members are depicted in FIGS. 3, 5 and 6, it will be appreciated that any desired number of reinforcement members may be utilized. It will further be appreciated that the reinforcement members 4 must be suspended within the mold prior to the forming of polymeric structure 10 so that reinforcement members 4 may be encased within the polymeric structure.

As depicted, each drive member 11 includes at least one drive face 12. Each drive member 11 preferably is formed with two lateral frictional drive faces 12 which slope inwardly toward one another with respect to a transverse direction of the endless track to form substantially an inverted V-shaped transverse cross-section. The angle of slope of such drive faces is preferably in the range of 30°-45° with respect to horizontal, and most preferably approximately 30°, but other angles of slope also may be chosen and drive members 11 also may be provided with any suitable type, number and configuration of drive faces. For example, each drive member 11 could be provided with two lateral frictional drive faces which slope outwardly with respect to a transverse direction of the endless track, thereby providing drive members 11 with concave V-shaped transverse cross-sections. Other configurations will further be understood from the above disclosure.

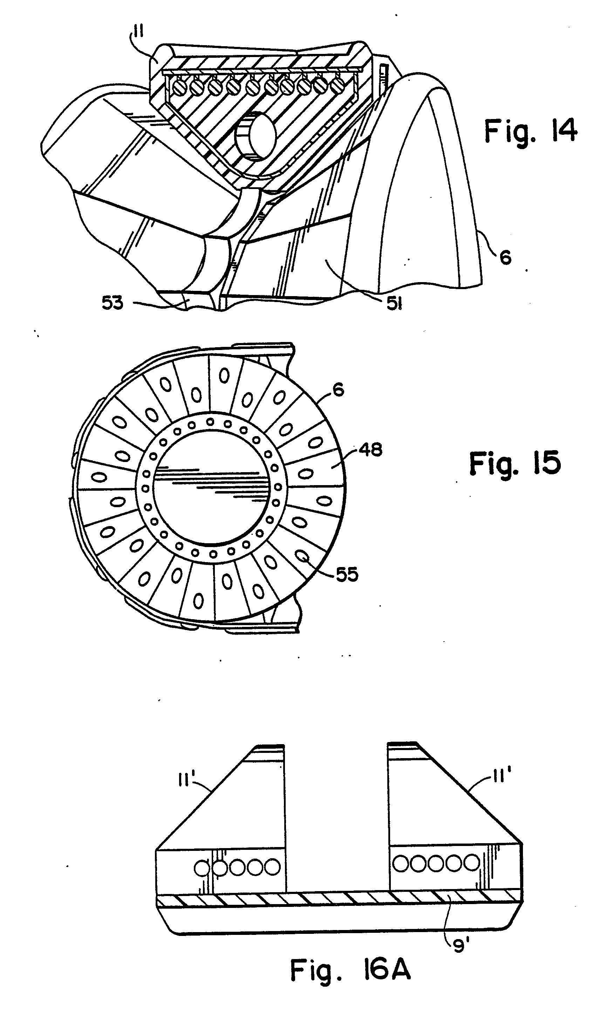

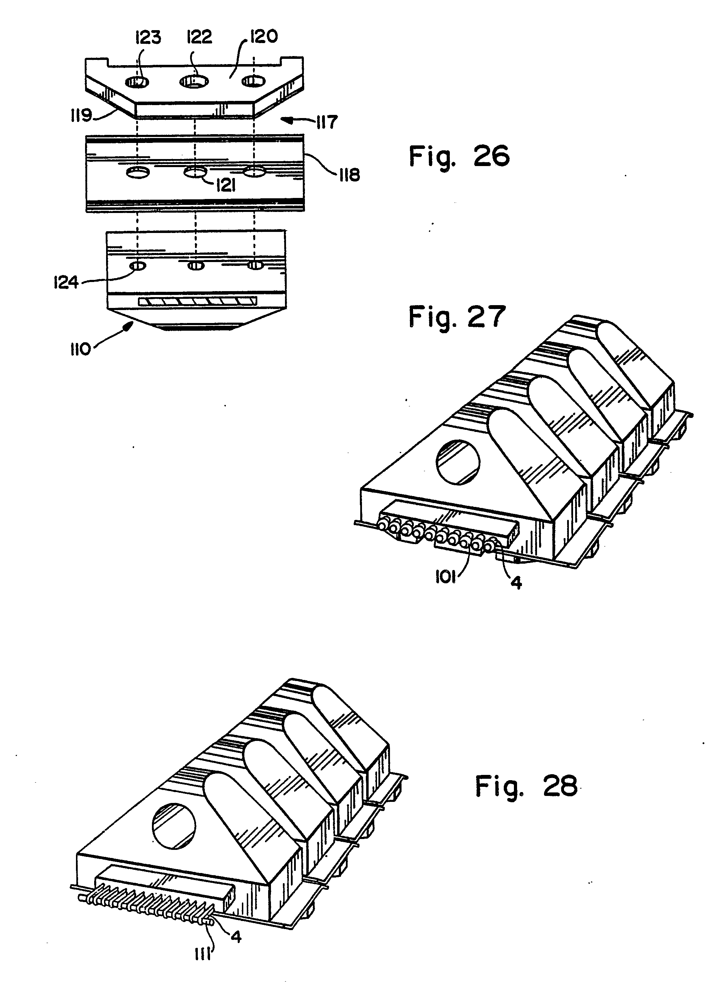

An additional upper drive surface 15 also may be formed on each drive member 11 for either frictional drive or sprocket drive by an axle of drive wheel 6 to be described below. As viewed in a transverse direction of the endless drive track, the upper drive surface 15 is narrower at its uppermost point than it is further down toward the drive track (see FIGS. 27 and 28), thus optimizing removal of dirt and debris. Drive members 11 also may have front and rear edges (lateral drive face side edges) 70, 71 which are inwardly sloped with respect to a longitudinal direction of the endless track drive system so that such edges will lie substantially parallel to one another as they proceed around drive wheel 6 of the track vehicle (see FIG. 11), thereby providing smoother operation, permitting use of a sprocket, and further reducing influx of detrimental dirt and debris. The gaps between adjacent drive members resulting from sloped edges 70 and 71 further permit dirt and debris to escape along straight runs of the endless track, and these gaps may vary in size without detriment to their dirt removal function. Drive members 11 also may be provided with vertically extending planar portions 13 below drive faces 12 so that externally directed portions of drive members 11 will extend beyond the radial peripheries of wheels 6 and 7 thereby raising the track vehicle 1 higher above the terrain to further protect the structural mechanisms of the track vehicle from dirt and debris (see FIG. 14). To reduce the mass of drive track 3, and also reduce consumption of polymeric material and consequent cost, one or more holes 14 also optionally may be formed in each drive member.

Each drive member 11 also optionally may include a base portion 9, and a support structure 16 fastened to each base portion 9 by welding, screws, bolts or other fastening means, in order to further reinforce drive members 11 and render it easier to mold polymeric structure 10. An additional support structure 69 also may be provided for suspending cables 4 above base portions 9 and further securing base portions 9 to polymeric structure 10. Base portions 9 preferably are made of steel or other metal, but may be made of some other strong, rigid material. Support structures 16 and 69 may be in the form of metal straps, or may be made from a rigid plastic material or other suitable rigid substance. Support structure 16 is preferably shaped to conform with the desired configuration of drive faces 12, but may be shaped in other configurations to serve its intended purposes. Support structure 69 likewise may be configured in a number of ways other than as shown.

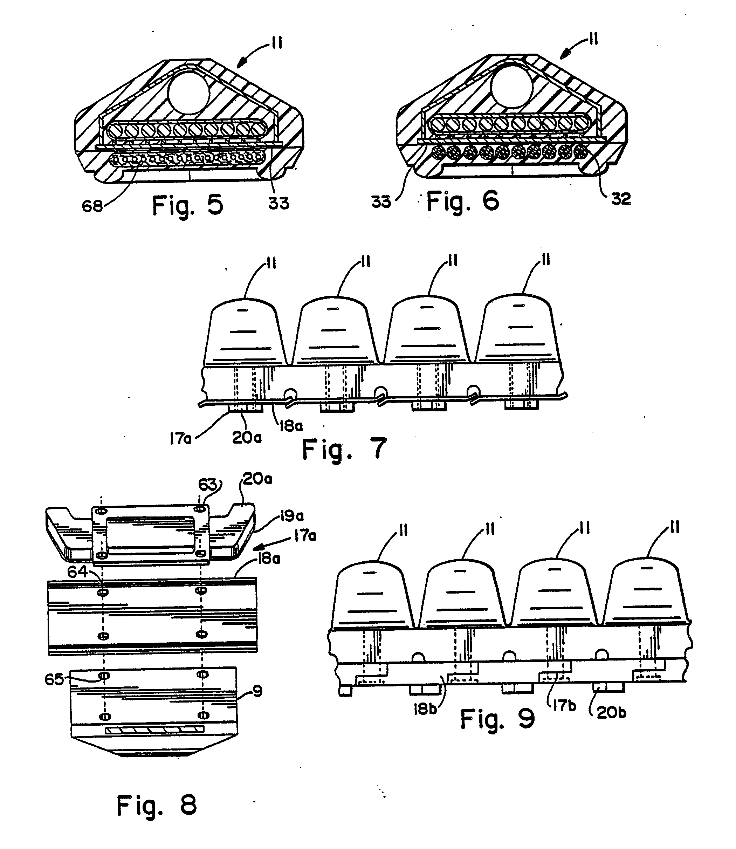

As depicted in FIGS. 2-6, endless track 3 also preferably includes polymeric tread members 17 which are integrally molded or otherwise integrally formed as part of the endless track (see FIGS. 3 and 4), or are permanently bonded thereto with adhesive or other bonding agent 33 (see FIGS. 5 and 6). Tread members 17 also may include bias-ply, fiber reinforcement layer 68 as depicted in FIG. 5, or may include reinforcing cables 32 of steel or other material as depicted in FIG. 6.

Alternatively, as depicted in FIGS. 7-10, tread members may be removably fixed to the various drive members 11. For example, removable tread members 17a may each include a metal backing plate 18a and a polymeric tread 20a bonded to a metal supporting plate 19a as depicted in FIGS. 7 and 8. As shown in FIG. 8, these individual treads and backing plates each preferably have four unthreaded holes 63 and 64, respectively, and are removably fastened to each of the base portions 9 of drive members 11 with suitable bolts or other fastening means received in threaded holes 65 of the base portions.

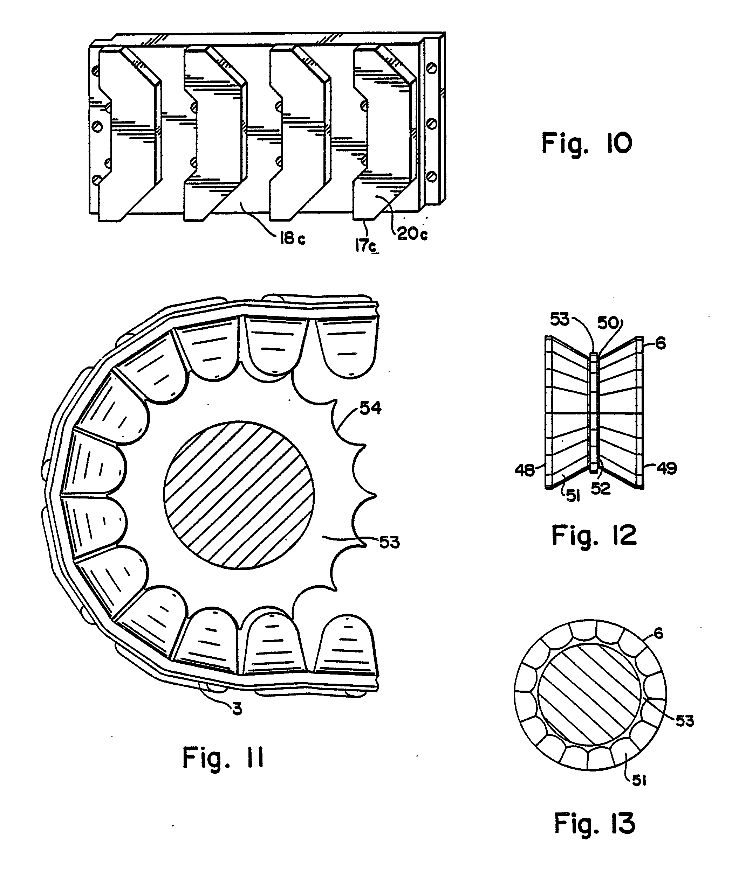

FIG. 9 depicts another type of removable polymeric tread member 17b, including a polymeric tread 20b molded with a polymeric backing plate 18b. Backing plate 18b dovetails with adjacent tread member backing plates, the overlapping ends of adjacent tread member backing plates being fastenable together with bolts or other fastening means into the base portions of corresponding drive members 11. FIG. 10 depicts yet still another removable polymeric tread member 17c with a polymeric tread 20c and a dovetailed polymeric backing plate 18c similar to FIG. 9, but having substantially greater length. Of course, any of the polymeric treads or backing plates may be reinforced with cables or a bias-ply, fiber layer. Furthermore, metal treads also may be utilized, or metal backing plates may be provided with metal grouser bars. The type of tread and backing plate to be utilized, and the material of the chosen tread and backing plate, whether rubber, metal, polyurethane or other material, are functions of manufacture and the type of terrain over which the endless track drive vehicle is to be utilized.

FIGS. 12 and 13 depict a drive wheel 6 suitable for use in the endless track drive system in accordance with the present invention. Drive wheel 6 includes first and second side portions 48, 49 connected together by axle portion 50. Each side portion 48, 49 preferably includes interior drive surfaces 51 sloped and shaped to substantially match the angle and shape of drive faces 12 of drive members 11 for engagement therewith. Axle 50 further preferably includes drive surfaces 52, the number, shape and size of which are determined by the configuration of drive members 11, and specifically drive faces 15 thereof which may engage with drive surfaces 52. Although the interior of drive wheel 6 preferably includes drive surfaces 51, 52 as discussed above, axle 50 may be deleted altogether, side portions 48 and 49 then being directly connected to one another, and drive surfaces 51, 52 may also be eliminated. Furthermore, wheels 7 and 8 of track vehicle 1 may or may not contain interior drive surfaces corresponding to drive surfaces 51 and 52 of drive wheel 6. Drive wheel 6 may also contain holes 55 as shown in FIG. 15 to permit escape of dirt and debris, as may wheels 7 and 8 as well.

As depicted in FIGS. 11-13, drive wheel 6 may also include a sprocket 53 for further driving the endless track drive system. Sprocket 53 includes concave drive surfaces 54 which are configured for engagement with drive surfaces 15 of drive members 11. FIG. 14 depicts a drive member 11 of drive track 3 engaging with interior drive surfaces 51 and sprocket 53 of drive wheel 6. Of course, the sprocket may take other forms. For example, rounded bars may be added between drive surfaces 51 of drive wheel side portions 48,49 to interfit between adjacent drive members to provide positive engagement therewith. By way of yet a further example, drive pins may be provided extending from the tops of the drive members for positive engagement with spaced recesses in the drive wheel axle. Other possible sprocket arrangements will be appreciated from the above disclosure.

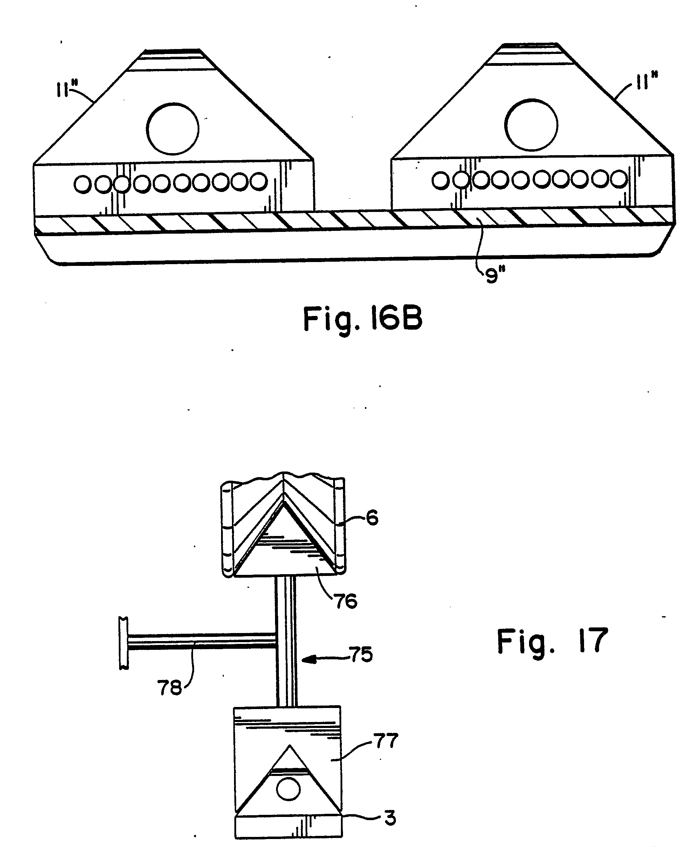

As depicted in FIG. 17, the modular endless track drive system also may be provided with one or more scrapers or sweepers 75 for removing dirt and debris from drive wheel 6, opposite end wheel 7, idler wheels or rollers 8 and/or the various drive faces on the drive members of the endless track. For example, scraper 75 may include an upwardly directed convex, inverted V-shaped scraper blade 76 and a downwardly directed concave, inverted V-shaped scraper blade 77 supported by a bracket 78 affixed on a supporting surface of the endless track drive vehicle. Thus, scraper 75 can be located so as to clean, for example, the drive wheel and endless track simultaneously, thereby preventing dirt and debris from interfering with the operation of the endless track drive system. With the structure shown in FIG. 17, any dirt scraped from drive wheel 6 will fall and be diverted by scraper blade 77 instead of becoming entrapped in the endless track. Of course, scraper 75 may be located at various positions on the endless track drive vehicle, may be provided with scraper blade 76 or 77 alone, and may be of a configuration other than as shown. Additionally, bristles, brushes or other cleaning instruments may be utilized in lieu of scraper blades 76 and 77.

The above-described endless track drive system is easy and cost-effective to manufacture. Optional base portions 9 of drive members 11 can be forged, cast or otherwise manufactured to the desired size, and optional support structures 16 and 69 can be affixed thereto by conventional means. Reinforcement members 4 can be suspended above a desired plurality of base portions 9, or otherwise suspended within a mold or other forming apparatus, and a suitable polymeric material molded or otherwise formed to encase the reinforcement members and provide a plurality of integral, interconnected drive members and tread members of desired configuration. Drive wheel 6 and sprocket 53 likewise easily can be manufactured through the use of known manufacturing techniques based upon the above disclosure of those features of the present invention.

The above-described endless track drive system is also easy and cost-effective to utilize. Since, in its preferred embodiment, the various drive members and tread members are integrally molded and interconnected into a single, closed loop endless track, the endless track can be simply installed and removed as a unit. Since the endless track is molded of a polymeric substance, with optional holes through the drive members to reduce polymeric mass, the endless track is relatively lightweight for ease and efficiency of installation and removal.

In accordance with the above, an improved endless track drive system is provided which can be easily and cost-effectively constructed and utilized, and which provides excellent operability.

Obviously, many modifications and variations to the disclosed endless track drive system are possible in light of the above teachings. For example, wider base portions 9', 9" can be provided as depicted in FIGS. 16A and 16B to provide for vehicles requiring wider endless tracks. In such cases, the polymeric endless track drive members can each be molded in the form of half members 11' or double members 11". Drive members 11' can be driven by a wider drive wheel or two properly spaced pneumatic driving tires. Drive members 11" can be driven by two properly spaced drive wheels or four properly spaced pneumatic drive tires. Of course, the described tread members and scraper would have to be reconfigured accordingly to coordinate with drive members 11' and 11". It is to be further understood that, within the scope of the appended claims, the invention also may be practiced otherwise then as specifically described. For example, the various aspects of the invention may be selected for combination in a number of permutations other than those shown and described.

It will be further appreciated that the disclosed endless drive track may be driven by the sprocket 53 or other suitable sprocket arrangements in the absence of any frictional drive engagement between a drive wheel and lateral drive surfaces on the drive members of the endless track, or with the sprocket 53 as the primary driving source. In this case, the above-disclosed endless track may still be utilized, or the endless track may be reshaped as depicted in FIG. 20 to generally conform to the shape of the friction drive elastomeric closed loop endless drive track which has been utilized on heavy duty track vehicles (see FIG. 19). As shown in FIG. 20, the endless track drive system 91 includes a drive track 92 with drive members 93, tread members 94 and reinforcement members 95, generally corresponding to members 82-85d of the track depicted in FIG. 19. These various elements are otherwise constructed and shaped as discussed above relative to the first endless track embodiment. Endless track 92 also includes flat lands 92a corresponding to flat lands 82a of the FIG. 19 track, in the event that it is desired to utilize friction drive wheels 86 in addition to the sprocket 53. In contrast with guide members 83 of the FIG. 19 track, drive members 93 are integrally formed with the endless track 92 in order to ensure that the drive members 93 are not broken away from the track 92 by the force of the sprocket drive, and they are otherwise constructed and shaped substantially the same as drive members 11 of the first embodiment discussed above. Furthermore, although endless drive track 92 can be made of various polymeric materials, it is preferable that the endless drive track 92 be molded of polyurethane or an equivalent high-strength plastic material in order to again provide adequate strength for sprocket drive. Finally, grooves 96 optionally may be provided either between or adjacent drive members 93 in order to assist dirt and debris removal. Grooves 96 can be either perpendicular to the longitudinal axis of endless drive track 92 or can be angled so as to eliminate any vibration between the grooves and the vehicle wheels.

Although the sprocket utilized with the FIG. 20 track need not necessarily include drive wheel side portions 48, 49 as depicted in FIG. 12, it is preferable to construct the sprocket 53 on such a drive wheel 6 in order to better prevent dirt and debris from becoming engaged between the sprocket 53 and the drive members 93. It is also preferable to again include holes 55 in drive wheel side portions 48, 49 to permit escape of any dirt and debris which does manage to infiltrate between the sprocket 53 and the drive members 93. Of course, any of the other above-disclosed elements of the first endless track embodiment can be incorporated into the endless track embodiment depicted in FIG. 20, including the base portions 9, support structures 16 and 69, holes 14, inwardly sloping front and rear edges 70, 71, any of the various disclosed tread members, and the scraper 75. The distance between drive members 93 in the longitudinal direction of the endless track may be varied, as it may be for the above-disclosed first endless track embodiment, so long as sufficient space is provided to permit proper curvature about the sprocket/drive wheel and to permit escape of dirt and debris.

The endless track embodiment depicted in FIG. 20 has particular application to heavy duty track vehicles equipped with an endless track drive system as is disclosed in FIGS. 18 and 19. In order to expand the variety of terrains over which such track vehicles may be utilized, and to reduce both the influx of and detrimental effects of dirt and debris, such vehicles can be retrofitted with the endless track of FIG. 20. To accomplish the retrofit, the FIG. 20 polymeric track of the instant invention is substituted for the friction drive elastomeric track previously existing on such track vehicles. Furthermore, a sprocket is added to the track vehicle in order to positively drive the polymeric endless track via drive members 93. The sprocket can either be incorporated between the friction drive wheels 86, or can be entirely substituted in lieu of the friction drive wheels 86. If the latter alternative is chosen, the substituted sprocket may take the form depicted in FIGS. 12 and 15. Once retrofitted in this manner, the heavy duty track vehicle depicted in FIG. 18 is utilizable across additional terrains which it would not otherwise be able to traverse.

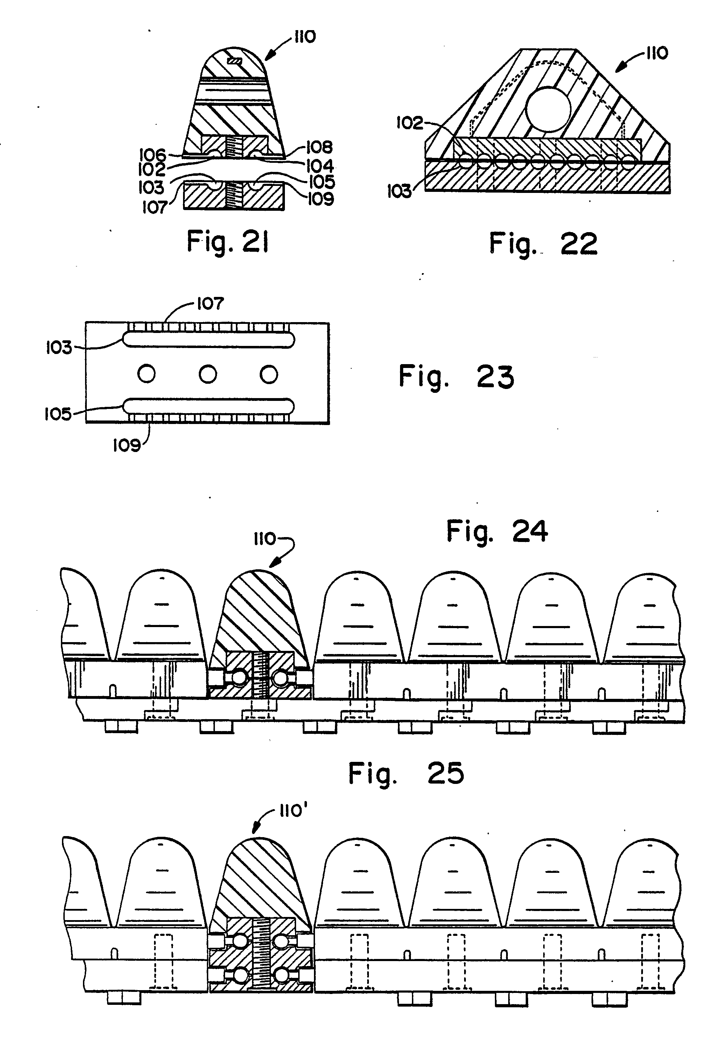

Although the above endless track embodiments have been disclosed as being closed loops, the endless track could also have two ends joined together by a master link such as is disclosed in FIGS. 21-23. In this case, cable ends at each end of the endless track are provided with spherical retaining members 101 (see FIG. 27) to be received in grooves 102-105 and recesses 106-109 in upper and lower base portion parts of a master link 110. The upper and lower base portion parts of master link 110 are then fastened together with a threaded bolt or other appropriate fastening means to sandwich retaining members 101 therebetween, thereby forming the endless track. Of course, more than one master link could be utilized in a given endless track.

FIG. 24 depicts master link 110 fastened in place between the ends of the endless track equipped with tread members as previously depicted in FIG. 9. FIG. 25 depicts an alternative master link 110′ which is adapted to accommodate additional connector members extending from a continuous tread member similar to the one previously depicted in FIG. 10. These and other possible master link embodiments are disclosed in detail in U.S. Application Serial No. 049,819, filed May 14, 1987, the disclosure of which is fully incorporated herein by reference.

FIG. 26 depicts a tread member 117 which may be utilized on the master link 110 in conjunction with utilization of the tread member of FIG. 8 on the endless track. Similarly to the tread member of FIG. 8, each master link tread member 117 includes a metal backing plate 118 and a polymeric tread 120 bonded to a metal supporting plate 119, each preferably having three unthreaded holes 121-123, respectively. The metal supporting plate 119 includes two outer holes 123 which are smaller than and concentric with the outer holes 122 in polymeric tread 120, such that the tread and backing plate can be removably fastened to the lower master link base portion part with suitable bolts or other fastening means received in two outer threaded holes 124 of the lower part. The center holes of tread 120, supporting plate 119 and backing plate 118 are all large enough that a suitable bolt or other fastening means can be passed therethrough and received in the center threaded hole 124 of the lower master link portion part. In this way, tread member 117 can be removed from the master link without completely disconnecting the upper and lower base portion parts of the master link. Again, the details of this master link tread member are disclosed in detail in U.S. Application Serial No. 049,819, the disclosure of which is fully incorporated herein by reference.

Finally, as an alternative to utilization of spherical retaining members 101 for joining the cable ends of the endless track in the master link, the cable of FIG. 28 may be utilized. As shown there, a single cable 4 can be wound around grooved retaining rods 111 with the cable ends fastened within and enveloped by the molded endless track as depicted in FIG. 28. The retaining rods 111 can then be retained between the upper and lower master link base portion parts as described above relative to spherical retaining members 101. In this way, the cable to be utilized with the master link can be greatly simplified and strengthened. Of course, as discussed above, reinforcement members made of other metals or materials such as nylon or other high strength light weight cord or fabric may be substituted for steel cables 4 in either of the FIG. 27 or FIG. 28 embodiments.

Thus, while only certain embodiments of the invention have been specifically described herein, it will be apparent that numerous modifications may be made thereto without departing from the spirit and scope of the invention.

## Claims

1. An endless track drive system comprising:
a polymeric endless drive track including a plurality of polymeric drive members integrally formed therewith;
at least one reinforcement member encased within said endless drive track; and
sprocket means for engaging with said drive members to drive said endless drive track.

2. The endless track drive system of claim 1, said endless drive track forming a closed loop.

3. The endless track drive system of claim 1, said endless drive track having two ends joined together with a master link.

4. The endless track drive system of claim 3, each said reinforcement member having two ends retained by said master link to form said endless drive track.

5. The endless track drive system of claim 4, said reinforcement member ends including retaining members corresponding to and being retained between cooperating recesses in upper and lower master link base portion parts.

6. The endless track drive system of claim 3, said at least one reinforcement member comprising a single reinforcement member whose ends are retained within the endless drive track and which is wound around retaining rods at the ends of said endless drive track, said retaining rods corresponding to and being retained between cooperating recesses in upper and lower master link base portion parts.

7. The endless track drive system of claim 1, said sprocket means comprising a sprocket incorporated onto the axle of a drive wheel, said axle extending between first and second drive wheel side portions.

8. The endless track drive system of claim 7, said drive wheel frictionally engaging with said endless drive track to thereby further drive said endless drive track.

9. The endless track drive system of claim 7, said drive wheel side portions including a plurality of holes for escape of debris.

10. The endless track drive system of claim 7, further comprising scraper means for scraping dirt and debris from at least said drive wheel and said endless drive track.

11. The endless track drive system of claim 1, further comprising at least one tread member fixed to said endless drive track and extending in a direction opposite from said drive members.

12. The endless track drive system of claim 11, said at least one tread member being bias-ply, fiber reinforced.

13. The endless track drive system of claim 11, said at least one tread member being cable reinforced.

14. The endless track drive system of claim 11, said at least one tread member being integrally formed with said endless drive track.

15. The endless track drive system of claim 14, said at least one tread member being substantially chevron-shaped in plan view.

16. The endless track drive system of claim 11, said at least one tread member being bonded to said endless drive track.

17. The endless track drive system of claim 11, said at least one tread member being removably fastened to said endless drive track.

18. The endless track drive system of claim 17, a separate tread member being removably fastened opposite to each drive member.

19. The endless track drive system of claim 17, said at least one tread member comprising a plurality of dovetailed tread members, overlapping ends of said tread members being together removably fastened to said endless drive track.

20. The endless track drive system of claim 19, each said dovetailed tread member comprising a polymeric tread molded with a polymeric backing plate.

21. The endless track drive system of claim 17, said at least one removable tread member comprising a polymeric tread bonded to a metal supporting plate which is fastened to said endless drive track with a metal backing plate sandwiched therebetween.

22. The endless track drive system of claim 21, said polymeric tread comprising three tread portions bonded to said metal supporting plate in a transverse direction of said endless track, with spaces between adjacent tread portions to allow escape of dirt and debris.

23. The endless track drive system of claim 22, said at least one removable tread member being substantially U-shaped in plan view.

24. The endless track drive system of claim 21, said endless drive track having two ends joined together with a master link, and at least one tread member being removably fastened to said master link, said master link removable tread member comprising a polymeric tread bonded to a metal supporting plate which is fastened to said master link with a metal backing plate sandwiched therebetween.

25. The endless track drive system of claim 1, each said drive member having at least one hole therein to reduce the mass of said drive member.

26. The endless track drive system of claim 1, each said drive member comprising a polymeric covered base portion and support structure extending from said base portion.

27. The endless track drive system of claim 26, said support structure comprising a strap with two side wall portions sloping inwardly with respect to a transverse direction of said endless track.

28. The endless track drive system of claim 26, said support structure comprising a strap fixing said at least one reinforcement member to said base portion.

29. An endless track drive system comprising: a polymeric endless drive track including a plurality of polymeric drive members integrally formed therewith, each said drive member including at least two lateral faces sloping inwardly with respect to a transverse direction of said endless drive track; at least one reinforcement member encased within said endless drive track; and
sprocket means for engaging with said drive members to drive said endless drive track.

30. An endless track drive system comprising:
a polymeric endless drive track including a plurality of polymeric drive members integrally formed therewith, each said drive member being situated centrally of said endless drive track between horizontal flat lands thereof, and each said drive member·including at least two lateral faces sloping inwardly with respect to a transverse direction of said endless drive track;
at least one reinforcement member· encased within said endless drive track; and
sprocket means for engaging with said drive members to drive said endless drive track.

31. An endless track drive system comprising:
a polymeric endless drive track including a plurality of polymeric drive members integrally formed therewith, a plurality of grooves being formed in said endless drive track for removal of dirt and debris;
at least one reinforcement member encased within said endless drive track; and
sprocket means for engaging with said drive members to drive said endless drive track.

32. An endless track drive system comprising:
a polymeric endless drive track including a plurality of polymeric drive members integrally formed therewith;
at least one reinforcement member encased within said endless drive track with ends extending from opposite ends of said endless drive track;
a master link within which said reinforcement member ends are retained to form said endless drive track; and
sprocket means for engaging with said drive members to drive said endless drive track.

33. An endless track drive system comprising:
a polymeric endless drive track including a plurality of polymeric drive members integrally formed therewith;
at least one reinforcement member encased within said endless drive track;
a drive wheel with first and second side portions which include a plurality of holes for escape of debris; and
a sprocket incorporated onto the axle of said drive wheel for engaging with said drive members to drive said endless drive track.

34. An endless track drive system comprising:
a polymeric endless drive track including a plurality of polymeric drive members integrally formed therewith, each said drive member including at least two lateral faces sloping inwardly with respect to a transverse direction of said endless drive track and an upper face between said at least two lateral faces, said upper face being narrower at an uppermost point than at a lowermost point as viewed in a transverse direction of said endless drive track;
at least one reinforcement member encased within said endless drive track; and
sprocket means for engaging with said upper drive faces of said drive members to drive said endless drive track.

35. A method for retrofitting a heavy duty track vehicle having a friction drive elastomeric closed loop endless drive track with guide members fasened thereto, said method comprising the steps of:
replacing said elastomeric closed loop endless drive track with a polymeric endless drive track having a plurality of polymeric drive members integrally formed therewith and at least one reinforcement member encased therein; and
installing sprocket means on said track vehicle for engaging said drive members to thereby provide positive drive.

36. The method of claim 35, comprising the additional step of removing existing friction drive wheels from said track vehicle upon installation of said sprocket means.

37. The method of claim 35, said step of installing sprocket means comprising the installation of a drive wheel with a sprocket incorporated onto the axle thereof, said axle extending between first and second drive wheel side portions, said drive wheel side portions including a plurality of holes for escape of debris.

38. the method of claim 37, said drive wheel being installed so as to frictionally engage with said polymeric endless drive track to thereby further drive said polymeric endless drive track.

39. The endless track drive system of claim 37, comprising the additional step of installing scraper means for scraping dirt and debris from at least said drive wheel and said polymeric endless drive track.

40. The method of claim 35, comprising the additional step of fastening at least one removable tread member to said polymeric endless drive track.

41. The method of claim 40, wherein a separate tread member is removably fastened opposite to each drive member.

42. The method of claim 40, wherein a metal supporting plate with a polymeric tread bonded thereto is fastened to the polymeric endless drive track with a metal backing plate sandwiched therebetween.

43. The method of claim 35, comprising the additional step of installing a master link to join two ends of said polymeric endless drive track to form said polymeric endless drive track.

44. The method of claim 43, wherein ends of said at least one reinforcement member extend from said polymeric endless drive track and are retained by said master link to form said polymeric endless drive track.

45. The method of claim 43, wherein ends of said at least one reinforcement member are retained within the polymeric endless drive track, said reinforcement member is wound around retaining rods at the ends of said polymeric endless drive track, and said retaining rods with said reinforcement member wound thereon are retained by said master link to form said polymeric endless drive track.

46. The method of claim 43, comprising the additional step of fastening at least one removable tread member to said master link.

47. The method of claim 46, wherein a metal supporting plate with a polymeric tread bonded thereto is fastened to said master link with a metal backing plate sandwiched therebetween.

48. A method for retrofitting a heavy duty track vehicle having a friction drive elastomeric closed loop endless drive track with guide members fastened thereto, said method comprising the steps of: replacing said elastomeric closed loop endless drive track with a polymeric endless drive track having a plurality of polymeric drive members integrally formed therewith and at least one reinforcement member encased therein, each said drive member including at least two lateral faces sloping inwardly with respect to a transverse direction of said polymeric endless drive track; and installing sprocket means on said track vehicle for engaging said drive members to thereby provide positive drive.

49. A method for retrofitting a heavy duty track vehicle having a friction drive elastomeric closed loop endless drive track with guide members fastened thereto, said method comprising the steps of: replacing said elastomeric closed loop endless drive track with a polymeric endless drive track having a plurality of polymeric drive members integrally formed therewith, grooves formed thereon for removal of dirt and debris, and at least one reinforcement member encased therein, each said drive member being located centrally of said polymeric endless drive track between horizontal flat lands thereof, and each said drive member including at least two lateral faces sloping inwardly with respect to a transverse direction of said polymeric endless drive track; and installing sprocket means on said track vehicle for engaging said drive members to thereby provide positive drive.

50. A method for retrofitting a heavy duty track vehicle having a friction drive elastomeric closed loop endless drive track with guide members fastened thereto, said method comprising the steps of: replacing said elastomeric closed loop endless drive track with a polymeric endless drive track having a plurality of polymeric drive members integrally formed therewith and at least one reinforcement member encased therein; removing existing friction drive wheels from said track drive vehicle; and installing at least one drive wheel on said track drive vehicle, said drive wheel including first and second side portions, with a plurality of holes therein for escape of debris, connected by an axle, a sprocket being incorporated on the axle for engaging said drive members to thereby provide positive drive.

51. A method for retrofitting a heavy duty track vehicle having a friction drive elastomeric closed loop endless drive track with guide members fastened thereto, said method comprising the steps of: removing the elastomeric closed loop endless drive track from said track vehicle; removing existing friction drive wheels from said track vehicle; installing at least one drive wheel onto said track vehicle, said drive wheel including first and second side portions connected by an axle, a sprocket being incorporated on said axle; installing onto said track vehicle a polymeric drive track with two unconnected ends, said polymeric drive track having a plurality of polymeric drive members integrally formed therewith and at least one reinforcement member encased therein; and joining the unconnected ends of said polymeric drive track with a master link to form an endless polymeric drive track whose drive members are engaged by said sprocket for thereby providing positive drive to said polymeric endless drive track.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16A

Fig. 16B

Fig. 17

Fig. 18

Fig. 19

Fig. 20

Fig. 21

106
102
103
107

108
104
105
109

110

Fig. 22

102

103

110

Fig. 23

107

103

105

109

Fig. 24

110

Fig. 25

110'

Fig. 26

Fig. 27

Fig. 28

| DOCUMENTS CONSIDERED TO BE RELEVANT | | | EP 88306969.2 |
|---|---|---|---|
| Category | Citation of document with indication, where appropriate, of relevant passages | Relevant to claim | CLASSIFICATION OF THE APPLICATION (Int. Cl.4) |
| A | DE - A1 - 3 319 067 (LIERMANN) <br> * Fig. 5,6 * <br> -- | | B 62 D 55/24 |
| A | GB - A - 2 104 015 (BELL) <br> * Fig. * <br> -- | | |
| A | FR - A1 - 2 471 905 (COLMANT ET CUVELIER) <br> * Fig. 1-7 * <br> -- | | |
| A | WO - A1 - 87/06 204 (CATERPILLAR) <br> * Fig. * <br> ---- | | |
| | | | TECHNICAL FIELDS SEARCHED (Int. Cl.4) |
| | | | B 62 D |

The present search report has been drawn up for all claims

| Place of search | Date of completion of the search | Examiner |
|---|---|---|
| VIENNA | 03-01-1989 | PANGRATZ |